# EUROPÄISCHE PATENTSCHRIFT

(11) **EP 4 182 566 B1**
(45) Veröffentlichungstag und Bekanntmachung des Hinweises auf die Patenterteilung: **29.07.2026**
(21) Anmeldenummer: 21758600.7
(22) Anmeldetag: 10.08.2021
(51) Int. Cl.: F15B 15/14, F16J 15/16, F15B 15/24

(54) **DRUCKMITTELZYLINDER MIT STATISCHER ENDLAGENDICHTUNG**
PRESSURE-MEDIUM CYLINDER HAVING A STATIC END-POSITION SEAL
CYLINDRE À FLUIDE SOUS PRESSION COMPRENANT UNE GARNITURE D'ÉTANCHÉITÉ STATIQUE DE POSITION TERMINALE

(30) Priorität: 15.08.2020 DE 102020121486
(43) Veröffentlichungstag der Anmeldung: 24.05.2023
(73) Patentinhaber: Aventics GmbH, 30880 Laatzen (DE)
(72) Erfinder: PILCHER, Martin, 30163 Hannover (DE)
(74) Vertreter: Spahn, Tobias
(86) Internationale Anmeldenummer: PCT/DE2021/100682
(87) Internationale Veröffentlichungsnummer: WO 2022/037746

(56) Entgegenhaltungen:
- DE-A1- 102005 025 423
- DE-A1- 102015 112 351
- DE-A1- 2 651 398
- JP-A- H01 172 602
- US-A- 2 736 294

## Beschreibung

### Technisches Gebiet

Die Erfindung betrifft einen Druckmittelzylinder mit einer statischen Endlagendichtung.

### Stand der Technik

Druckmittelzylinder sind fluidisch betriebene Antriebselemente zur Umwandlung eines Drucks als Betriebsenergie in eine Kraft, die beispielsweise als Antriebskomponente eines Linearantriebs eingesetzt werden. Dabei ist ein mit einem Druckmittel beaufschlagbarer Kolben axialbeweglich in einem Zylindergehäuse angeordnet. Durch den Kolben und eine mit dem Kolben verbundene, aus dem Zylindergehäuse an einer Stirnseite austretende Kolbenstange kann wiederum ein Maschinenteil oder ein Werkstück bewegt werden.

Zur Abdichtung des Zylinderinnenraums ist der Kolbenstangenaustritt üblicherweise mit einer dynamischen Ringdichtung und/oder einem Abstreifer ausgebildet, wobei sich die Kolbenstange mit dem Kolbenhub relativ zu dem abdichtenden Bauteil bewegt. Hierbei reibt die Kolbenstange an der Dichtung. Die aufgrund der Bewegung der Kolbenstange zu dem abdichtenden Bauteil permanent bestehende Reibkraft wirkt sich bei hochdynamischen Anwendungen negativ auf erreichbare Schaltzeiten aus. Gleichzeitig unterliegt das abdichtende Bauteil insbesondere bei hochdynamischen Anwendungen aufgrund der Reibbelastung einem verhältnismäßig hohen Verschleiß. Schließlich können in Hygienic Design-Anwendungen Anforderungen an eine gute Reinigbarkeit solcher Druckmittelzylinder aufgrund der durch das abdichtenden Bauteil im Bereich des Kolbenstangenaustritts geschaffenen Toträume, Kanten und Spalten oftmals nur unzureichend oder nur mit einem sehr hohen Reinigungsaufwand erfüllt werden. Die Grundsätze des Hygienic Designs definieren Anforderungen der reinigungsgerechten Gestaltung von Geräten und Produktionsanlagen, die für die Herstellung von Lebensmitteln bestimmt sind. Dies erfordert für einen im Bereich der Verarbeitung von Lebensmitteln eingesetzten Druckmittelzylinder unter anderem, dass er nach einem Produktionsdurchlauf gut von außen reinigbar und desinfizierbar ist und Chemikalien gut abfließen können, sodass eine Kontamination von Lebensmitteln durch Mikroorganismen, Materialkorrosion oder Chemikalien sicher vermieden werden kann. Derartige Kontaminationen können beispielsweise bei der Verwendung einer Ringdichtung aufgrund des entstehenden Ringspalts nicht hinreichend sicher vermieden werden.

Die Druckschriften DE 26 51 398 A1 und DE 10 2015 112 351 A1 offenbaren jeweils einen Druckmittelzylinder mit einer an einer Stirnseite austretenden Kolbenstange und einer in einem außerhalb des Zylindergehäuses angeordneten Kolbenstangenabschnitt sich radial von der Kolbenstange erstreckenden Anschlagsfläche. Bei dem von der DE 26 51 398 A1 offenbarten Druckmittelzylinder ist die Kolbenstange beidseitig abgedichtet aus dem Zylinder herausgeführt. Die DE 10 2015 112 351 A1 offenbart keinen eigenen technischen Beitrag zur Frage der Abdichtung des Zylinderinnenraums.

Die Druckschriften US 2 736 294 A und JP H01 172602 A offenbaren Druckmittelzylinder, bei den zwischen der Kolbenstange und dem Zylindergehäuse zur Abdichtung des Zylinderinnenraums jeweils Ringdichtungen angeordnet sind.

Die Druckschrift DE 10 2005 025 423 B4 offenbart einen Druckmittelzylinder, bei dem der Innenraum des Zylindergehäuses am Kolbenstangenaustritt mit einer Ringdichtung und einem Abstreifer von der Atmosphäre abgedichtet ist.

### Offenbarung der Erfindung

Der Erfindung liegt die Aufgabe zu Grunde, einen Druckmittelzylinder bereitzustellen, mit dem die Nachteile des Stands der Technik vermieden werden. Insbesondere soll ein Druckmittelzylinder ohne ein die Kolbenstange dynamisch abdichtendes Bauteil bereitgestellt werden, der gut und sicher von außen reinigbar ist.

Die Aufgabe wird erfindungsgemäß durch einen Druckmittelzylinder nach Anspruch 1 gelöst. Vorteilhafte Weiterbildungen der Erfindung sind in den Unteransprüchen angegeben.

Den Kern der Erfindung bildet ein Druckmittelzylinder, aufweisend ein Zylindergehäuse, einen in diesem axial bewegbar angeordneten Kolben, eine mit dem Kolben verbundene Kolbenstange, welche das Zylindergehäuse zu einer Stirnseite hin durch eine Austrittsöffnung durchdringt, wobei die Kolbenstange in einem außerhalb des Zylindergehäuses angeordneten Kolbenstangenabschnitt mit einer sich radial von der Kolbenstange erstreckenden Anschlagsfläche ausgebildet ist, welche beim Einfahren der Kolbenstange in einer Endlage an das Zylindergehäuse angreift und hierbei einen Spaltbereich oder Spaltbereiche zwischen der Kolbenstange und dem Rand der Austrittsöffnung dichtend abdeckt und/oder dichtend umgreift. Ein solcher Druckmittelzylinder weist eine statische Endlagendichtung auf, mit welcher der Druckmittelzylinder in der Endlage im eingefahrenen Zustand abgedichtet ist, indem die Anschlagsfläche einen Spaltbereich oder Spaltbereiche zwischen der Kolbenstange und dem Rand der Austrittsöffnung dichtend abdeckt und/oder dichtend umgreift. Die Endlage der Kolbenstange im eingefahrenen Zustand kann hierbei durch die Anschlagfläche definiert sein. Die Verwendung eines dynamisch dichtenden Bauteils ist nicht erforderlich, wodurch eine Reibungsreduzierung und Geschwindigkeitssteigerung des Aktors erreicht ist. Zugleich ist eine gute und sichere Reinigbarkeit des Druckmittelzylinders von außen im eingefahrenen Zustand gewährleistet, da die Anschlagsfläche die Austrittsöffnung in diesem Zustand dichtend abdeckt und/oder umgreift. Der Druckmittelzylinder kann als einfach oder als doppelt wirkender Zylinder ausgestaltet sein. Bei der Ausgestaltung als doppelt-wirkender Zylinder, der auch auf der Kolbenstangenseite mit Druck beaufschlagt wird, wird eine Leckage bewusst in Kauf genommen. Ein Fremdkörpereintrag ist hierbei aufgrund des in der zur Austrittsöffnung benachbarten Zylinderkammer bestehenden Überdrucks verhindert. Insbesondere bei hochdynamischen Anwendungen (beispielsweise Sortiermaschinen) nimmt der ausgefahrene Zustand lediglich einen geringen Zeitanteil ein, weshalb eine Leckage gegenüber den durch den Verzicht auf ein dynamisch dichtendes Bauteil erreichten Vorteilen akzeptierbar ist. Bei der Ausgestaltung als einfach wirkender Druckmittelzylinder, bei welcher der Kolben nur in Ausfahrrichtung mit einem Arbeitsfluid beaufschlagbar ist, wird das Risiko eines Fremdkörpereintrags während des Betriebs in die zur Austrittsöffnung benachbarte Zylinderkammer insbesondere in der Einfahrbewegung entweder in Kauf genommen, oder durch weitere Maßnahmen wie beispielsweise eine nach unten geneigte Einbaulage oder eine zusätzliche Einhausung des Druckmittelzylinders verringert oder verhindert. Durch den Verzicht auf eine dynamische Dichtung sind Losbrech- und Reibkräfte der Kolbenstange gegenüber statischen Komponenten des Zylindergehäuses stark reduziert, was insbesondere bei hochdynamischen Anwendungen einen Betrieb mit kürzeren Schalt- und Ansprechzeiten ermöglicht. Ferner sind wartungs- und reparaturbedingte Stand und Ausfallzeiten erheblich reduziert, da kein Austausch verschleißintensiverer dynamischer Dichtungen erforderlich ist.

Der Dichtsitz der Anschlagsfläche ist verbessert oder auch in einem drucklosen Zustand einfach gewährleistet, indem das Zylindergehäuse mit einer in diesem angeordneten, in Einfahrrichtung der Kolbenstange wirkenden Rückstellfeder ausgebildet ist. Die Rückstellfeder bewirkt in der Endlage der Kolbenstange einen Kraftschluss zwischen der Stirnseite des Zylindergehäuses und der Anschlagsfläche.

Eine weitere Verbesserung des Dichtsitzes ist erreicht, in dem die Anschlagsfläche mit einem sich radial von der Kolbenstange erstreckenden oder die Kolbenstange radial umgreifenden Dichtkörper ausgebildet ist, der den oder die Spaltbereiche zwischen der Kolbenstange und dem Rand der Austrittsöffnung in der Endlage dichtend abdeckt und/oder dichtend umgreift. Der Dichtkörper wirkt gleichzeitig als Bremskörper, indem er bei Erreichen der Endlage durch Verformung die Bewegungsenergie der bewegten Teile aufnimmt und so eine Bremswirkung auf die Kolbenstange ausübt.

Eine verbesserte Abstimmung der Funktion und/oder der Lebensdauer der dichtenden und bremsenden Komponenten ist ermöglicht, indem die Anschlagsfläche mit einem sich radial von der Kolbenstange erstreckenden Bremskörper oder mehreren radial benachbart zur Kolbenstange angeordneten Bremskörpern und mit einem sich radial von diesem oder diesen erstreckenden oder den oder die Bremskörper radial umgreifenden Dichtkörper ausgebildet ist, der den oder die Spaltbereiche zwischen der Kolbenstange und dem Rand der Austrittsöffnung in der Endlage dichtend umgreift. Der Dichtkörper ist hierbei vorzugsweise mit einer größeren Einbauhöhe als der oder die Bremskörper ausgebildet und überragt diesen oder diese in Richtung der Stirnseite des Zylindergehäuses. Gleichzeitig ist der Dichtkörper in dieser Ausgestaltung bedingt durch seine Form und/oder das verwendete Material mit einer höheren Nachgiebigkeit ausgebildet als der oder die Bremskörper. Aufgrund der größeren Einbauhöhe greift der Dichtkörper in der Einfahrbewegung der Kolbenstange früher an das Zylindergehäuse an als der oder die Bremskörper, wobei er unter Verformung eine erste Bremswirkung auf die Kolbenstange ausübt, bis der oder die mit einer geringeren Nachgiebigkeit ausgebildete oder ausgebildeten Bremskörper den Hauptteil der Energie aufnimmt oder aufnehmen. Aufgrund der höheren Nachgiebigkeit wird der Dichtkörper bis zum Erreichen der Endlage stärker komprimiert als der oder die Bremskörper, wodurch eine gute dichtende Anlage des Dichtkörpers am Zylindergehäuse gewährleistet ist. Dicht- und Bremskörper sind in dieser Ausführung in Material und Bauweise optimierbar, nämlich zur Gewährleistung einer jeweils möglichst guten Funktion (Dichten oder Bremsen) bei einer gleichzeitig möglichst hohen Lebensdauer.

In einer baulich umgekehrten Ausführung ist die Anschlagsfläche mit einem sich radial vom Dichtkörper erstreckenden Bremskörper oder mehreren radial benachbart zum Dichtkörper angeordneten Bremskörpern ausgebildet. Auch in dieser Ausführung ist der Dichtkörper vorzugsweise mit einer größeren Einbauhöhe und mit einer höheren Nachgiebigkeit ausgebildet als der oder die Bremskörper. Auch in dieser Ausführung greift der Dichtkörper in der Einfahrbewegung früher an das Zylindergehäuse an und wird bis zum Erreichen der Endlage stärker komprimiert als der oder die Bremskörper. Dicht- und Bremskörper sind auch in dieser Ausführung in Material und Bauweise optimierbar, nämlich zur Gewährleistung einer jeweils möglichst guten Funktion (Dichten oder Bremsen) bei einer gleichzeitig möglichst hohen Lebensdauer.

Ferner kann in einer alternativen Ausführung anstatt der Anschlagfläche auch das Zylindergehäuse an der Stirnseite in einer vergleichbaren Weise mit Dicht- und/oder Bremskörpern ausgebildet sein, wobei der Dichtkörper in der eingefahrenen Endlage der Kolbenstange jeweils dichtend an die Anschlagsfläche angreift.

In einer konstruktiven Abwandlung des Druckmittelzylinders wird auch auf eine Kolbendichtung verzichtet, so dass auch zwischen dem Kolben und der Innenwand des Zylindergehäuses ein Spaltbereich oder Spaltbereiche gebildet ist oder sind. In dieser Ausgestaltung wird gänzlich auf dynamische Dichtungen verzichtet, wodurch Losbrech- und Reibkräfte insgesamt weitestmöglich reduziert und weiter verkürzte Schalt- und Ansprechzeiten ermöglicht sind. In dieser Ausgestaltung besteht zusätzlich eine innere Leckage zwischen den beidseits des Kolbens gebildeten Zylinderkammern. Bei einer Ausführung des Druckmittelzylinders als einfach wirkendem Zylinder, in welcher der Kolben in Ausfahrrichtung mit einem Arbeitsfluid beaufschlagbar ist, gelangt in der Ausfahrbewegung Arbeitsfluid aus der beaufschlagten Zylinderkammer durch den oder die zwischen dem Kolben und der Innenwand des Zylindergehäuses gebildeten Spaltbereich oder Spaltbereiche auf die nicht beaufschlagte Kolbenseite und über den oder die zwischen der Kolbenstange und dem Rand der Austrittsöffnung gebildeten Spaltbereich oder Spaltbereiche schließlich in die Umgebung. Der Fluidaustritt wirkt mithin in der Ausfahrbewegung und der ausgefahrenen Stellung der Kolbenstange einem Fremdkörpereintrag in die zur Austrittsöffnung benachbarten Zylinderkammer durch Überdruck entgegen. Bei einer Ausführung des Druckmittelzylinders als doppelt wirkendem Zylinder, in welcher der Kolben auch in Einfahrrichtung mit einem Arbeitsfluid beaufschlagbar ist, wird in dieser Ausgestaltung ohne dynamische Dichtungen einem Fremdkörpereintrag in der Ausfahr- und der Einfahrbewegung durch Überdruck sicher entgegenwirkt. Zum Einfahren der Kolbenstange wird der Kolben über die zur Austrittsöffnung benachbarte Zylinderkammer beaufschlagt, wodurch Arbeitsfluid über den oder die zwischen der Kolbenstange und dem Rand der Austrittsöffnung gebildeten Spaltbereich oder Spaltbereiche austritt und einem Fremdkörpereintrag bis zum Erreichen der eingefahrenen Endlage entgegenwirkt, in der sodann eine statische Abdichtung durch die Anschlagsfläche erfolgt.

In einer weiteren Ausgestaltung wird einem Fremdkörpereintrag über den oder die zwischen der Kolbenstange und dem Rand der Austrittsöffnung gebildeten Spaltbereich oder Spaltbereiche durch eine aktive Überdruckspülung entgegengewirkt, indem das Zylindergehäuse mit mindestens einem Spülkanal ausgebildet ist, der in den Durchdringungskanal für die Kolbenstange mündet, wobei eine Beaufschlagung des Spülkanals gemeinsam mit der Beaufschlagung einer Zylinderkammer erfolgt. Bei einer Ausführung des Druckmittelzylinders als einfach wirkendem Zylinder, wird in der Ausfahrbewegung gemeinsam mit der Beaufschlagung der Zylinderkammer auch der Spülkanal beaufschlagt, wodurch Arbeitsfluid in den Durchdringungskanal gelangt und durch den oder die zwischen der Kolbenstange und dem Rand der Austrittsöffnung gebildeten Spaltbereich oder Spaltbereiche in die Umgebung austritt. Der Fluidaustritt wirkt mithin in der Ausfahrbewegung und der ausgefahrenen Stellung der Kolbenstange einem Fremdkörpereintrag in die zur Austrittsöffnung benachbarten Zylinderkammer durch Überdruck entgegen. Bei einer Ausführung des Druckmittelzylinders als doppelt wirkendem Zylinder wird der Spülkanal auch in der Einfahrbewegung gemeinsam mit der jeweiligen Zylinderkammer beaufschlagt, wodurch Arbeitsfluid auch in der Einfahrbewegung über den oder die zwischen der Kolbenstange und dem Rand der Austrittsöffnung gebildeten Spaltbereich oder Spaltbereiche austritt und einem Fremdkörpereintrag bis zum Erreichen der eingefahrenen Endlage entgegenwirkt, in der sodann eine statische Abdichtung durch die Anschlagsfläche erfolgt.

Bei einer Ausführung des Druckmittelzylinders als einfach wirkendem Zylinder, wird auch in der Einfahrbewegung ein Fremdkörpereintrag in die zur Austrittsöffnung benachbarten Zylinderkammer durch einen entweichenden Überdruck verhindert, indem die zuvor beaufschlagte Kammer über die den Spülkanal entlüftbar ausgestaltet ist.

Weitere Vorteile der Erfindung sind nachstehend gemeinsam mit der Beschreibung bevorzugter Ausführungsbeispiele der Erfindung anhand der Figuren näher dargestellt. Es zeigen:
- Fig. 1a: eine schematische Teilschnittdarstellung eines Druckmittelzylinders mit eingefahrener Kolbenstange;
- Fig. 1b: eine schematische Teilschnittdarstellung des Druckmittelzylinders gemäß Fig. 1 mit ausgefahrener Kolbenstange;
- Fig. 2a: eine schematische Teilschnittdarstellung eines Druckmittelzylinders gemäß einem zweiten Ausführungsbeispiel mit eingefahrener Kolbenstange;
- Fig. 2b: eine schematische Teilschnittdarstellung des Druckmittelzylinders gemäß Fig. 2a mit ausgefahrener Kolbenstange;
- Fig. 3a: eine schematische Teilschnittdarstellung eines Druckmittelzylinders gemäß einem dritten Ausführungsbeispiel mit eingefahrener Kolbenstange;
- Fig. 3b: eine schematische Teilschnittdarstellung des Druckmittelzylinders gemäß Fig. 3a mit der Kolbenstange während der Ausfahrbewegung;
- Fig. 3c: eine schematische Teilschnittdarstellung des Druckmittelzylinders gemäß Fig. 3a mit der Kolbenstange während der Einfahrbewegung;
- Fig. 4a: eine schematische Teilschnittdarstellung eines Druckmittelzylinders gemäß einem vierten Ausführungsbeispiel mit eingefahrener Kolbenstange;
- Fig. 4b: eine schematische Teilschnittdarstellung des Druckmittelzylinders gemäß Fig. 4a mit ausgefahrener Kolbenstange;
- Fig. 5a: eine schematische Teilschnittdarstellung eines Druckmittelzylinders gemäß einem fünften Ausführungsbeispiel mit eingefahrener Kolbenstange;
- Fig. 5b: eine schematische Teilschnittdarstellung des Druckmittelzylinders gemäß Fig. 5a mit ausgefahrener Kolbenstange.

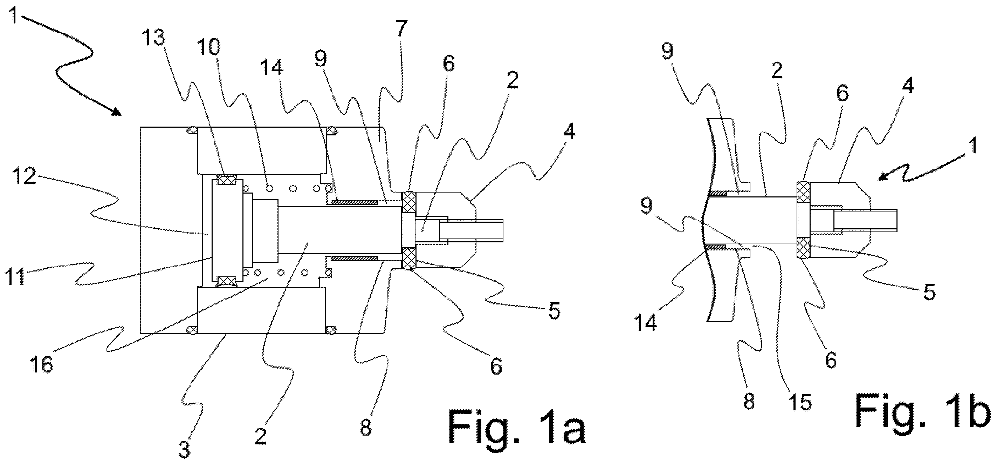

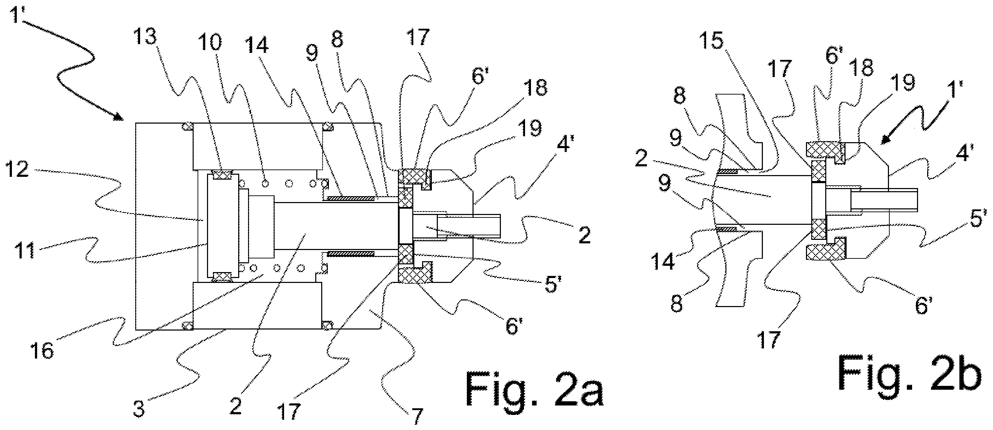

Die Fig. 1a und 1b zeigen ein erstes Ausführungsbeispiel eines Druckmittelzylinders 1 als schematische Teilschnittdarstellungen. Fig 1a zeigt den Druckmittelzylinder 1 mit der Kolbenstange 2 in der eingefahrenen Endlagenposition. Die Kolbenstange 2 ist in einem außerhalb des Zylindergehäuses 3 angeordneten Kolbenstangenabschnitt mit dem Anschlag 4 ausgebildet. Der Anschlag 4 weist eine sich radial von der Kolbenstange 2 erstreckende Anschlagsfläche 5 auf, die mit einem sich ebenfalls radial von der Kolbenstange 2 erstreckenden Dichtkörper 6 ausgebildet ist. Die kolbenstangenseitige Stirnseite des Zylindergehäuses 3 ist durch den Zylinderdeckel 7 gebildet. In der eingefahrenen Endlage der Kolbenstange 2 greift der Anschlag 4 an der durch den Zylinderdeckel 7 gebildeten Stirnseite des Zylindergehäuses 3 an dieses an, wobei der Dichtkörper 6 einen zwischen der Kolbenstange 2 und dem Durchdringungskanal 8 gebildeten Spaltbereich 9 dichtend abdeckt. Dabei ist der Übergang von Anschlag 4 zum Dichtkörper 6, der in der Endlage eine ebene bis leicht ballige Kontur aufweist, bis hin zum Zylinderdeckel 7 fluchtend ohne Stufen oder Spalte gestaltet im Sinne hygienischer Designvorgaben. Darüber hinausgehend können der das Zylindergehäuse 3 und der Anschlag 4 durch im Hygienic Design grundsätzlich bekannte Maßnahmen mit Radien und unter Vermeidung horizontaler Flächen ausgebildet sein, um im konkreten Anwendungskontext je nach Einbaulage des Druckmittelzylinders das Ablaufen von Reinigungsmitteln weiter zu verbessern (in Fig. 1a und 2b nicht dargestellt). Das Erreichen der Endlage der Kolbenstange 2 im eingefahrenen Zustand wird durch das Angreifen des Anschlags 4 an das Zylindergehäuse definiert, indem der Anschlag 4 die Bewegung der Kolbenstange 2 in diesem Augenblick abstoppt. In der in Fig. 1a dargestellten eingefahrenen Endlagenposition der Kolbenstange 2 wird der Anschlag 4 durch die als Druckfeder ausgestaltete Rückstellfeder 10 gegen den Zylinderdeckel 7 des Zylindergehäuses 3 gepresst. Die Rückstellfeder 10 ist hierzu im Zylindergehäuse 3 zwischen dem Kolben 11 und der Innenseite des Zylinderdeckels 7 in Einfahrrichtung vorgespannt angeordnet. Alternativ kann ein ausreichender Dichtsitz des Anschlags 4 auf Zylindergehäuse 3 auch durch andere Maßnahmen gewährleistet werden, wie beispielsweise eine geneigte Einbaulage mit einer Last auf der Kolbenstange im eingefahrenen Zustand, die Vorspannung des Anschlags 4 in Einfahrrichtung durch auf der Außenseite des Druckmittelzylinders 3 angeordnete Mittel oder die Anordnung eines Magneten in der Anschlagsfläche 5 und/oder der durch den Zylinderdeckel 7 gebildeten Stirnseite des Zylindergehäuses 3. Zum Ausfahren der Kolbenstange 2 wird der Kolben 11 über die Zylinderkammer 12 mit einem Druck beaufschlagt. Der Kolben 11 ist mit der Kolbendichtung 13 gegen die Innenwand des Zylindergehäuses 3 dynamisch abgedichtet. Die Kolbenstange 3 ist im Durchdringungskanal 8 gleitend in der Gleitbuchse 14 geführt. Die Gleitbuchse 14 dient lediglich der Reibungsreduzierung beim Gleiten der Kolbenstange 2 im Durchdringungskanal 8, dichtet die Kolbenstange jedoch nicht fluiddicht gegen den Durchdringungskanal 8 ab. Die Verwendung der Gleitbuchse 14 ist nicht unbedingt erforderlich, die Kolbenstange 2 kann stattdessen auch direkt im Durchdringungskanal 8 geführt sein, wofür vorzugsweise der Zylinderdeckel 7 und die Kolbenstange 2 aus zueinander verschleiß- und reibungsarm gepaarten Materialien gebildet sind. Der Spaltbereich 9 setzt sich zwischen der Gleitbuchse 14 und der Kolbenstange 2 bis zum Innenraum des Zylindergehäuses 3 hin fort, was in den Darstellungen Fig. 1a und 1b aus zeichnungstechnischen Gründen nicht gesondert beziffert ist. Fig. 1b zeigt einen kolbenstangenseitigen Ausschnitt des Druckmittelzylinders 1, wobei sich die die Kolbenstange 2 in der ausgefahrenen Position befindet, in welcher der Anschlag 4 vom Zylinderdeckel 7 gelöst ist. In dieser Position ist der Spaltbereich 9 freigegeben, der sich zwischen der Kolbenstange 2 und dem Rand der Austrittsöffnung 15 des Durchdringungskanals 8 erstreckt. Über den Spaltbereich 9 besteht eine Fluidverbindung zwischen der Austrittöffnung 15 und der zur Austrittsöffnung 15 benachbarten Zylinderkammer 16. Beim Abschalten der Beaufschlagung des Kolbens 11 über die Zylinderkammer 12 fährt die Kolbenstange 2 aufgrund der Vorspannung der Rückstellfeder 10 in das Zylindergehäuse 3 ein, bis der Anschlag 4 in der Endlage an den Zylinderdeckel 7 stößt. Hierbei bremst der Dichtkörper 6 den Bewegungsimpuls ab, indem er sich elastisch verformt und greift gleichzeitig dichtend an den Zylinderdeckel 7 des Zylindergehäuses 3 an, indem er den zwischen der Kolbenstange 2 und dem Rand der Austrittsöffnung 15 gebildeten Spaltbereich 9 abdeckt.

Die Fig. 2a und 2b zeigen ein zweites Ausführungsbeispiel eines Druckmittelzylinders 1' als schematische Teilschnittdarstellungen. Der Druckmittelzylinder 1' besitzt eine gegenüber dem Druckmittelzylinder 1 geänderte Konfiguration des Anschlags 4'. Die Anschlagsfläche 5' ist mit einem sich radial von der Kolbenstange 2 erstreckenden Bremskörper 17 und einem den Bremskörper radial umgreifenden Dichtkörper 6' ausgebildet. Der Dichtkörper 6' besitzt eine in axialer Richtung größere Einbauhöhe als der Bremskörper 17 und überragt diesen oder diese in Richtung des Zylinderdeckels 7. Gleichzeitig besitzt der Dichtkörper 6'eine höhere Nachgiebigkeit als der Bremskörper 17. Im Übrigen ist der Druckmittelzylinder 1' identisch zum Druckmittelzylinder 1 aufgebaut. Fig. 2a zeigt den Druckmittelzylinder 1' mit der Kolbenstange 2 in der eingefahrenen Endlagenposition. Fig. 2b zeigt einen kolbenstangenseitigen Ausschnitt des Druckmittelzylinders 1', wobei sich die Kolbenstange 2 in der ausgefahrenen Position befindet, in welcher der Anschlag 4' vom Zylinderdeckel 7 gelöst ist. Beim Abschalten der Beaufschlagung des Kolbens 11 über die Zylinderkammer 12 fährt die Kolbenstange 2 aufgrund der Vorspannung der Rückstellfeder 10 in das Zylindergehäuse 3 ein, bis der Anschlag 4' in der Endlage an den Zylinderdeckel 7 stößt. Hierbei greift zunächst der Dichtkörper 6' an den Zylinderdeckel 7 des Zylindergehäuses 3 an, wobei er sich verformt. Ab einem entsprechenden Verformungsweg greift auch der Bremskörper 17 an den Zylinderdeckel 7 des Zylindergehäuses 3 an und nimmt den Hauptteil der Bewegungsenergie auf, indem er sich ebenfalls verformt, bis die Endlage erreicht ist. Der Dichtkörper 6' greift dichtend an den Zylinderdeckel 7 des Zylindergehäuses 3 an, indem er den zwischen der Kolbenstange 2 und dem Rand der Austrittsöffnung 15 gebildeten Spaltbereich 9 umgreift. Auch in dieser Ausführung ist dabei der Übergang vom Anschlag 4' zum Dichtkörper 6', der in der Endlage eine ebene bis leicht ballige Kontur aufweist, bis hin zum Zylinderdeckel 7 fluchtend ohne Stufen oder Spalte gestaltet. Darüber hinaus begrenzt der Bremskörper 17 konstruktiv die Kompression des Dichtkörpers 6', was dessen Materialermüdung über die Produktlebensdauer reduziert und somit die Zuverlässigkeit der Dichtfunktion im Sinne hygienischer Designvorgaben verbessert. Die Materialeigenschaften des Dichtkörpers 6' und des Bremskörpers 17 können derart eingestellt werden, dass nach den Anforderungen im jeweiligen Anwendungskontext einerseits die Bewegungsenergie durch den Bremskörper 17 in geeigneter Weise aufgenommen und andererseits eine hinreichende Dichtheit durch die formschlüssige Anlage des Dichtkörpers 6' gewährleistet ist. Zur Befestigung des Dichtkörpers 6' am Anschlag 4' ist der Dichtkörper 6' mit einem senkrecht in Richtung der Kolbenstange 2 abgewinkelten Kragen 18 ausgebildet, der formschlüssig in eine korrespondierende, umlaufende Nut 19 auf der Mantelfläche des Anschlags 4' eingreift.

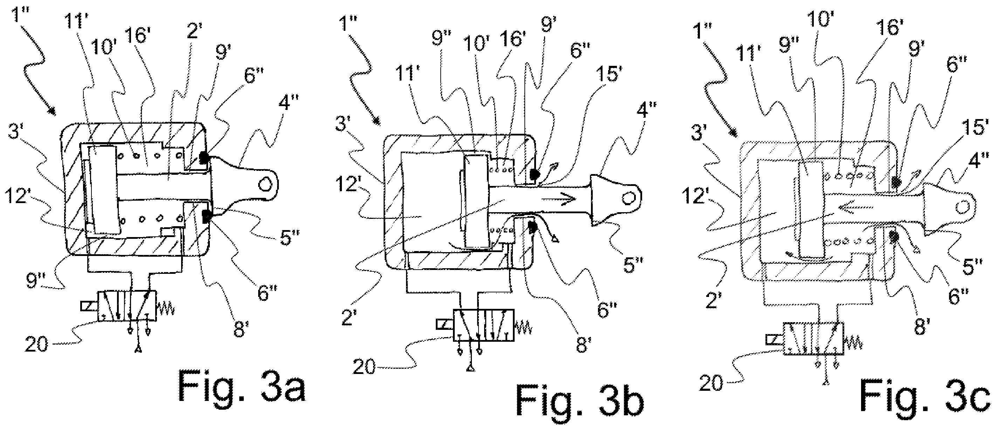

Die Fig. 3a bis 3c zeigen ein drittes Ausführungsbeispiel eines Druckmittelzylinders 1" als schematische Teilschnittdarstellungen. Der Druckmittelzylinder 1" ist als doppelt wirkender Zylinder ausgestaltet, indem die beidseits des Kolbens 11' gebildeten Zylinderkammern 12' und 16' durch das 5/2-Wegeventil 20 abwechselnd gegensinnig beaufschlagbar und entlüftbar sind. Die Fig. 3a zeigt den Druckmittelzylinder 1"mit der Kolbenstange 2' in der eingefahrenen Endlagenposition. In dieser Position greift der Anschlag 4" mit der sich radial von der Kolbenstange 2' erstreckenden Anschlagsfläche 5" an die kolbenstangenseitige Stirnseite des Zylindergehäuses 3' an. Das Zylindergehäuse 3' ist an der Stirnseite mit einem die Austrittsöffnung 15' radial umgreifenden Dichtkörper 6" ausgebildet, der in der eingefahrenen Endlage der Kolbenstange 2' dichtend an die Anschlagsfläche 5" angreift. Zur Befestigung ist Dichtkörper 6" formschlüssig in eine korrespondierende Nut mit Hinterschnitt auf der Außenseite des Zylindergehäuses 3' eingesetzt. Der Übergang von Anschlag 4" zum Dichtkörper 6" und bis hin zur Stirnseite des Zylindergehäuses 3' ist hierbei gemäß hygienischer Designvorgaben fluchtend ohne Stufen oder Spalte gestaltet. Ferner ist der Übergang ohne horizontale Flächen ausgestaltet, um das Ablaufen von Reinigungsflüssigkeiten ohne Rückstände zu gewährleisten. Die Anschlagsfläche 5" deckt in der eingefahrenen Endlage der Kolbenstange 2' den zwischen der Kolbenstange 2' und dem Rand der Austrittsöffnung gebildeten Spaltbereich 9' dichtend ab. Der Kolben 11' ist dichtungslos ausgeführt, weshalb auch zwischen dem Kolben 11' und der Innenwand des Zylindergehäuses 3' ein Spaltbereich 9"gebildet ist. Zum Ausfahren der Kolbenstange 2' wird die Kammer 12' des Druckmittelzylinders 1" durch das 5/2-Wegeventil 20 mit Druck beaufschlagt, wie dies in Fig. 3b dargestellt ist. Die Kolbenstange 2' bewegt sich in ihre ausgefahrene Position, wobei Arbeitsfluid aufgrund des Überdrucks in der Kammer 12' durch den Spaltbereich 9" in die zur Austrittsöffnung 15' benachbarte Zylinderkammer 16' und von dort über den Spaltbereich 9' durch die Austrittsöffnung 15' in die Umgebung gelangt. Der Fluidaustritt wirkt während der Ausfahrbewegung und in der ausgefahrenen Position der Kolbenstange 2'einem Fremdkörpereintrag in die zur Austrittsöffnung benachbarten Zylinderkammer 16' durch Überdruck entgegen, wobei eine permanente Leckage besteht. Zum Einfahren der Kolbenstange 2' wird die Kammer 16' des Druckmittelzylinders 1" durch das 5/2-Wegeventil 20 mit Druck beaufschlagt, wie dies in Fig. 3c dargestellt ist. Die Kolbenstange 2' bewegt sich in ihre eingefahrene Position, wobei Arbeitsfluid aufgrund des Überdrucks in der Kammer 16' über den Spaltbereich 9' durch die Austrittsöffnung 15' in die Umgebung gelangt. Der Fluidaustritt wirkt während der Einfahrbewegung einem Fremdkörpereintrag in die zur Austrittsöffnung benachbarten Zylinderkammer 16' durch Überdruck entgegen, wobei eine permanente Leckage besteht. Die Rückstellfeder 10' dient in dieser Ausgestaltung des Druckmittelzylinders 1" zur Sicherstellung der Dichtheit auch im drucklosen Zustand, beispielsweise, wenn die Druckluftversorgung vollständig abgestellt ist.

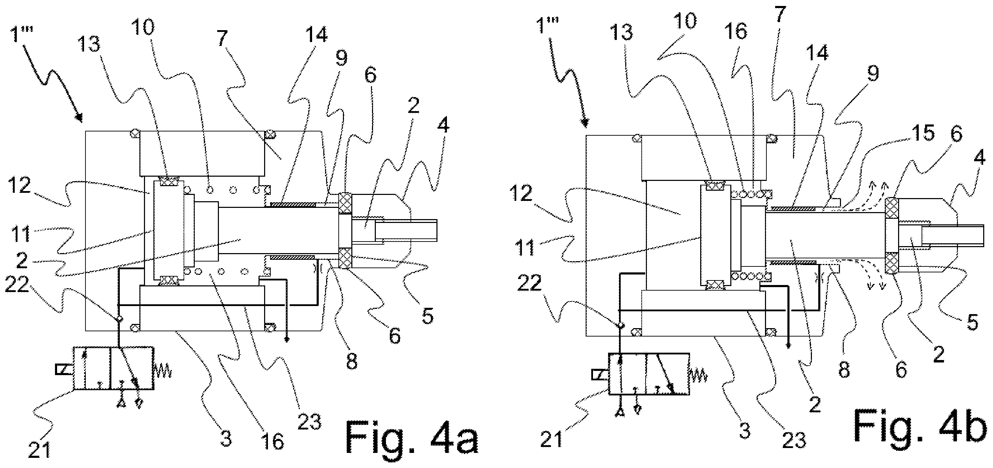

Die Fig. 4a und 4b zeigen ein viertes Ausführungsbeispiel eines Druckmittelzylinders 1‴ als schematische Teilschnittdarstellungen. Mit dem Druckmittelzylinder 1 identische konstruktive Merkmale des Druckmittelzylinders 1‴ sind mit identischen Bezugsziffern gekennzeichnet. Der Druckmittelzylinder 1‴ ist als einfach wirkender Zylinder ausgestaltet, indem die Zylinderkammer 12 durch das 3/2-Wegeventil 21 in einer Schaltstellung beaufschlagbar ist. Ferner umfasst der Druckmittelzylinder 1‴ das Rückschlagventil 22, durch das eine Entlüftung der Zylinderkammer 12 über den Druckluftausgang des 3/2-Wegeventils 21 in dessen Ruhestellung unterbunden ist. Bei der Beaufschlagung der Kammer 12 durch das 3/2-Wegeventil 21 gelangt Arbeitsfluid parallel über den Spülkanal 23 in den Durchdringungskanal 8, da der Spülkanal 23 in den Durchdringungskanal 8 mündet. In der Ausfahrbewegung der und in der ausgefahrenen Stellung der Kolbenstange 2, wie dies in Fig. 4b dargestellt ist, tritt Arbeitsfluid mithin über den Durchdringungskanal 8 an der Austrittsöffnung 15 in die Umgebung aus und wirkt einem Fremdkörpereintrag in die Zylinderkammer 16 entgegen. Nimmt das 3/2-Wegeventil 21 wieder seine geschlossene Ruhestellung ein, bewirkt die in Einfahrrichtung vorgespannte Rückstellfeder 10 das Einfahren der Kolbenstange 2. Hierbei wird die Zylinderkammer 12 aufgrund der Sperrstellung des Rückschlagventils 22 nicht über den Druckluftausgang des 3/2-Wegeventils 21, sondern den Spülkanal 23 entlüftet. Mithin tritt Arbeitsfluid auch in der Einfahrbewegung der Kolbenstange 2 über den Durchdringungskanal 8 an der Austrittsöffnung 15 in die Umgebung aus und wirkt einem Fremdkörpereintrag in die Zylinderkammer 16 entgegen.

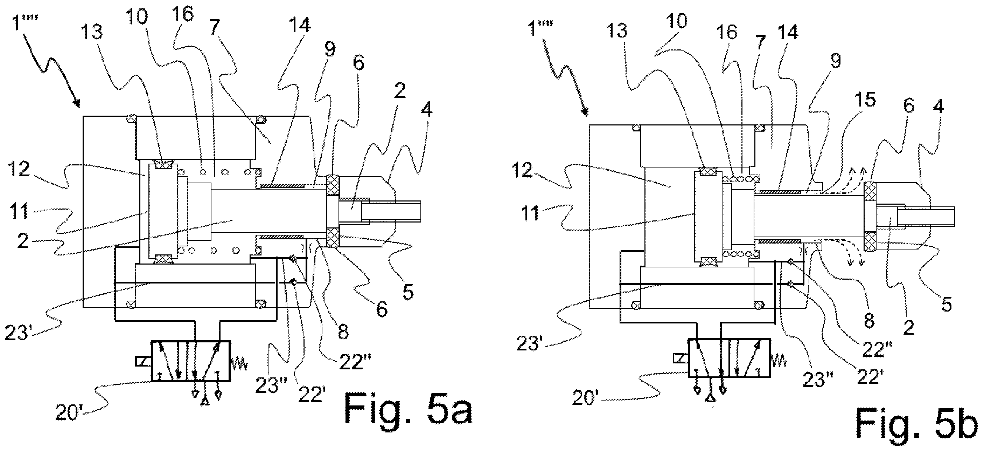

Die Fig. 5a und 5b zeigen ein fünftes Ausführungsbeispiel eines Druckmittelzylinders 1ʺʺ als schematische Teilschnittdarstellungen. Mit dem Druckmittelzylinder 1 identische konstruktive Merkmale des Druckmittelzylinders 1ʺʺ sind mit identischen Bezugsziffern gekennzeichnet. Der Druckmittelzylinder 1ʺʺ ist als doppelt wirkender Zylinder ausgestaltet, indem die beidseits des Kolbens 11 gebildeten Zylinderkammern 12 und 16 durch das 5/2-Wegeventil 20' abwechselnd gegensinnig beaufschlagbar und entlüftbar sind. Bei der Beaufschlagung der Kammer 12 durch das 5/2-Wegeventil 20' gelangt Arbeitsfluid parallel über den Spülkanal 23' in den Durchdringungskanal 8, da der Spülkanal 23' in den Durchdringungskanal 8 mündet. Das Rückschlagventil 22' öffnet in dieser Strömungsrichtung. Mit dem Rückschlagventil 22" ist gleichzeitig die Verbindung vom Spülkanal 23' über den Spülkanal 23" zur Zylinderkammer 16 gesperrt. In der Ausfahrbewegung der und in der ausgefahrenen Stellung der Kolbenstange 2, wie dies in Fig. 5b dargestellt ist, tritt Arbeitsfluid mithin über den Durchdringungskanal 8 an der Austrittsöffnung 15 in die Umgebung aus und wirkt einem Fremdkörpereintrag in die Zylinderkammer 16 entgegen. Die zweite Zylinderkammer 16 ist in der Ausfahrbewegung der und in der ausgefahrenen Stellung der Kolbenstange 2 gleichzeitig über den Druckluftausgang des 5/2-Wegeventils 20' entlüftet. Bei der Beaufschlagung der Kammer 16 durch das 5/2-Wegeventil 20' gelangt Arbeitsfluid ebenfalls parallel über den in den Durchdringungskanal 8 mündenden Spülkanal 23". Das Rückschlagventil 22" öffnet in dieser Strömungsrichtung. Mit dem Rückschlagventil 22' ist gleichzeitig die Verbindung vom Spülkanal 23' zur Zylinderkammer 12 gesperrt. Auch in der Einfahrbewegung der Kolbenstange 2 tritt mithin Arbeitsfluid über den Durchdringungskanal 8 an der Austrittsöffnung 15 in die Umgebung aus und wirkt einem Fremdkörpereintrag in die Zylinderkammer 16 entgegen. Die Rückstellfeder 10 dient in dieser Ausgestaltung des Druckmittelzylinders 1ʺʺ zur Sicherstellung der Dichtheit auch im drucklosen Zustand, beispielsweise, wenn die Druckluftversorgung vollständig abgestellt ist.

### Bezugszeichenliste

- 1, 1', 1", 1‴, 1ʺʺ: Druckmittelzylinder
- 2, 2': Kolbenstange
- 3, 3': Zylindergehäuse
- 4, 4', 4": Anschlag
- 5, 5', 5": Anschlagsfläche
- 6, 6', 6": Dichtkörper
- 7: Zylinderdeckel
- 8: Durchdringungskanal
- 9, 9', 9": Spaltbereich
- 10, 10': Rückstellfeder
- 11, 11': Kolben
- 12, 12', 16, 16': Zylinderkammer
- 13: Kolbendichtung
- 14: Gleitbuchse
- 15, 15': Austrittsöffnung
- 17: Bremskörper
- 18: Kragen
- 19: Nut
- 20, 20': 5/2-Wegeventil
- 21: 3/2-Wegeventil
- 22, 22', 22": Rückschlagventil
- 23, 23', 23": Spülkanal

## Patentansprüche

1. Druckmittelzylinder (1, 1', 1", 1‴, 1ʺʺ), aufweisend ein Zylindergehäuse (3, 3'), einen in diesem axial bewegbar angeordneten Kolben (11, 11'), eine mit dem Kolben (11, 11') verbundene Kolbenstange (2, 2'), welche das Zylindergehäuse (3, 3') zu einer Stirnseite hin durch eine Austrittsöffnung (15, 15') durchdringt, **dadurch gekennzeichnet, dass** zwischen der Kolbenstange (2, 2') und dem Rand der Austrittsöffnung (15, 15') ein offener Spaltbereich oder offene Spaltbereiche (9, 9') gebildet ist oder sind, durch den oder die ein Fluidaustritt aus dem Innenraum des Zylindergehäuses (3, 3') ermöglicht ist, und die Kolbenstange (2, 2') in einem außerhalb des Zylindergehäuses (3, 3') angeordneten Kolbenstangenabschnitt mit einer sich radial von der Kolbenstange (2, 2') erstreckenden Anschlagsfläche (5, 5', 5") ausgebildet ist, welche beim Einfahren der Kolbenstange (2, 2') in einer Endlage an das Zylindergehäuse (3, 3') angreift, wobei die Anschlagsfläche (5, 5', 5") den Spaltbereich oder die Spaltbereiche (9, 9') zwischen der Kolbenstange (2, 2') und dem Rand der Austrittsöffnung (15, 15') dichtend abdeckt und/oder dichtend umgreift.

2. Druckmittelzylinder (1, 1', 1", 1‴, 1ʺʺ) nach Anspruch 1, **dadurch gekennzeichnet, dass** das Zylindergehäuse (3, 3') mit einer in diesem angeordneten, in Einfahrrichtung der Kolbenstange (2, 2') wirkenden Rückstellfeder (10, 10') ausgebildet ist.

3. Druckmittelzylinder (1, 1', 1", 1‴, 1"") nach Anspruch 1 oder 2, **dadurch gekennzeichnet, dass** die Anschlagsfläche (5, 5', 5") mit einem sich radial von der Kolbenstange (2, 2') erstreckenden oder die Kolbenstange (2, 2') radial umgreifenden Dichtkörper (6, 6', 6") ausgebildet ist, der den oder die Spaltbereiche (9, 9') zwischen der Kolbenstange (2, 2') und dem Rand der Austrittsöffnung (15, 15') in der Endlage dichtend abdeckt und/oder dichtend umgreift.

4. Druckmittelzylinder (1, 1', 1", 1‴, 1ʺʺ) nach Anspruch 1 oder 2, **dadurch gekennzeichnet, dass** die Anschlagsfläche (5, 5', 5") mit einem sich radial von der Kolbenstange (2, 2') erstreckenden Bremskörper (17) oder mehreren radial benachbart zur Kolbenstange (2, 2')angeordneten Bremskörpern (17) und mit einem sich radial von diesem oder diesen erstreckenden oder den oder die Bremskörper (17) radial umgreifenden Dichtkörper (6, 6', 6") ausgebildet ist, der den oder die Spaltbereiche (9, 9') zwischen der Kolbenstange (2, 2') und dem Rand der Austrittsöffnung (15, 15') in der Endlage dichtend umgreift.

5. Druckmittelzylinder (1, 1', 1", 1‴, 1"") nach Anspruch 3, **dadurch gekennzeichnet, dass** die Anschlagsfläche (5, 5', 5") mit einem sich radial vom Dichtkörper (6, 6', 6") erstreckenden Bremskörper (17) oder mehreren radial benachbart zum Dichtkörper (6, 6', 6") angeordneten Bremskörpern (17) ausgebildet ist.

6. Druckmittelzylinder (1, 1', 1", 1‴, 1ʺʺ) nach Anspruch 1 oder 2, **dadurch gekennzeichnet, dass** das Zylindergehäuse (3, 3') an seiner Stirnseite mit einem sich radial von der Austrittsöffnung (15, 15') erstreckenden oder diese radial umgreifenden Dichtkörper (6, 6', 6") ausgebildet ist, der in der Endlage der Kolbenstange (2, 2') dichtend an die Anschlagsfläche (5, 5', 5") angreift.

7. Druckmittelzylinder (1, 1', 1", 1‴, 1ʺʺ) nach Anspruch 1 oder 2, **dadurch gekennzeichnet, dass** das Zylindergehäuse (3, 3') an seiner Stirnseite mit einem sich radial vom Rand der Austrittsöffnung (15, 15') erstreckenden Bremskörper (17) oder mehreren radial benachbart zum Rand der Austrittsöffnung (15, 15') angeordneten Bremskörpern (17) und mit einem sich radial von diesem oder diesen erstreckenden oder den oder die Bremskörper (17) radial umgreifenden Dichtkörper (6, 6', 6") ausgebildet ist, der in der Endlage dichtend an die Anschlagsfläche (5, 5', 5") angreift.

8. Druckmittelzylinder (1, 1', 1", 1‴, 1ʺʺ) nach Anspruch 6, **dadurch gekennzeichnet, dass** das Zylindergehäuse (3, 3') an seiner Stirnseite mit einem sich radial vom Dichtkörper (6, 6', 6") erstreckenden Bremskörper (17) oder mehreren radial benachbart zum Dichtkörper (6, 6', 6") angeordneten Bremskörpern (17) ausgebildet ist.

9. Druckmittelzylinder (1, 1', 1", 1‴, 1ʺʺ) nach einem der Ansprüche 1 bis 8, **dadurch gekennzeichnet, dass** zwischen dem Kolben (11, 11') und der Innenwand des Zylindergehäuses ein Spaltbereich oder Spaltbereiche (9") gebildet ist oder sind.

10. Druckmittelzylinder (1, 1', 1", 1‴, 1ʺʺ) nach einem der Ansprüche 1 bis 9, **dadurch gekennzeichnet, dass** das Zylindergehäuse (3, 3') mit mindestens einem Spülkanal (23, 23', 23") ausgebildet ist, der in einen Durchdringungskanal (8) für die Kolbenstange (2, 2') mündet, wobei eine Beaufschlagung des Spülkanals (23, 23', 23") gemeinsam mit der Beaufschlagung einer Zylinderkammer (12, 12', 16, 16') erfolgt.

11. Druckmittelzylinder (1, 1', 1", 1‴, 1ʺʺ)) nach Anspruch 10, **dadurch gekennzeichnet, dass** eine Zylinderkammer (12, 12', 16, 16') über den Spülkanal (23, 23', 23") entlüftbar ist.

## Claims

1. Pressure medium cylinder (1, 1', 1", 1‴, 1ʺʺ), comprising a cylinder housing (3, 3'), a piston (11, 11') arranged therein so as to be axially movable, and a piston rod (2, 2') which is connected to the piston (11, 11') and penetrates the cylinder housing (3, 3') toward an end face through an outlet opening (15, 15'), **characterized in that** an open gap region or regions (9, 9') is or are formed between the piston rod (2, 2') and the edge of the outlet opening (15, 15'), through which region or regions the escape of fluid from the interior of the cylinder housing (3, 3') is made possible, and the piston rod (2, 2') is formed in a piston rod portion which is arranged outside the cylinder housing (3, 3') and which has a stop surface (5, 5', 5") that extends radially from the piston rod (2, 2') and that contacts the cylinder housing (3, 3') in an end position when the piston rod (2, 2') is retracted, the stop surface (5, 5', 5") sealingly covering and/or sealingly engaging around the gap region or regions (9, 9') between the piston rod (2, 2') and the edge of the outlet opening (15, 15').

2. Pressure medium cylinder (1, 1', 1", 1‴, 1ʺʺ) according to claim 1, **characterized in that** the cylinder housing (3, 3') has a return spring (10, 10') arranged therein, which acts in the direction of insertion of the piston rod (2, 2').

3. Pressure medium cylinder (1, 1', 1", 1‴, 1ʺʺ) according to claim 1 or 2, **characterized in that** the stop surface (5, 5', 5") has a sealing body (6, 6', 6") which extends radially from the piston rod (2, 2') or radially engages around the piston rod (2, 2') and which, in the end position, sealingly covers and/or sealingly engages around the gap region or regions (9, 9') between the piston rod (2, 2') and the edge of the outlet opening (15, 15').

4. Pressure medium cylinder (1, 1', 1", 1‴, 1ʺʺ) according to claim 1 or 2, **characterized in that** the stop surface (5, 5', 5") has a brake body (17) extending radially from the piston rod (2, 2') or a plurality of brake bodies (17) arranged radially adjacent to the piston rod (2, 2') and has a sealing body (6, 6', 6") which extends radially from this brake body or these brake bodies or which radially engages around the brake body or bodies (17) and which, in the end position, sealingly engages around the gap region or regions (9, 9') between the piston rod (2, 2') and the edge of the outlet opening (15, 15').

5. Pressure medium cylinder (1, 1', 1", 1‴, 1ʺʺ) according to claim 3, **characterized in that** the stop surface (5, 5', 5") has a brake body (17) extending radially from the sealing body (6, 6', 6") or has a plurality of brake bodies (17) arranged radially adjacent to the sealing body (6, 6', 6").

6. Pressure medium cylinder (1, 1', 1", 1‴, 1ʺʺ) according to claim 1 or 2, **characterized in that** the cylinder housing (3, 3') has, on its end face, a sealing body (6, 6', 6") which extends radially from or engages around the outlet opening (15, 15') and which sealingly contacts the stop surface (5, 5', 5") in the end position of the piston rod (2, 2').

7. Pressure medium cylinder (1, 1', 1", 1‴, 1ʺʺ) according to claim 1 or 2, **characterized in that** the cylinder housing (3, 3') has, on its end face, a brake body (17) extending radially from the edge of the outlet opening (15, 15') or a plurality of brake bodies (17) arranged radially adjacent to the edge of the outlet opening (15, 15'), and a sealing body (6, 6', 6") which extends radially from this brake body or these brake bodies or radially engages around the brake body or bodies (17) and which sealingly contacts the stop surface (5, 5', 5") in the end position.

8. Pressure medium cylinder (1, 1', 1", 1‴, 1ʺʺ) according to claim 6, **characterized in that** the cylinder housing (3, 3') has, on its end face, a brake body (17) extending radially from the sealing body (6, 6', 6") or a plurality of brake bodies (17) arranged radially adjacent to the sealing body (6, 6', 6").

9. Pressure medium cylinder (1, 1', 1", 1‴, 1ʺʺ) according to any of claims 1 to 8, **characterized in that** a gap region or gap regions (9") is or are formed between the piston (11, 11') and the inner wall of the cylinder housing.

10. Pressure medium cylinder (1, 1', 1", 1‴, 1ʺʺ) according to any of claims 1 to 9, **characterized in that** the cylinder housing (3, 3') has at least one flushing channel (23, 23', 23") which opens into a penetration channel (8) for the piston rod (2, 2'), a supply to the flushing channel (23, 23', 23") taking place together with a supply to a cylinder chamber (12, 12', 16, 16').

11. Pressure medium cylinder (1, 1', 1", 1‴, 1ʺʺ) according to claim 10, **characterized in that** a cylinder chamber (12, 12', 16, 16') can be vented via the flushing channel (23, 23', 23").

## Revendications

1. Vérin à fluide sous pression (1, 1', 1", 1‴, 1ʺʺ), présentant un corps de vérin (3, 3'), un piston (11, 11') disposé de manière à être mobile axialement dans celui-ci, une tige de piston (2, 2') reliée au piston (11, 11') et traversant le corps de vérin (3, 3') vers une face frontale à travers une ouverture de sortie (15, 15'), **caractérisé en ce qu'**entre la tige de piston (2, 2') et le bord de l'ouverture de sortie (15, 15') est ou sont formées une zone de fente ouverte ou plusieurs zones de fentes ouvertes (9, 9') à travers laquelle ou lesquelles une sortie de fluide hors de l'espace intérieur du corps de vérin (3, 3') est permise, et la tige de piston (2, 2') est réalisée dans une section de tige de piston disposée à l'extérieur du corps de vérin (3, 3') et comportant une surface de butée (5, 5', 5") s'étendant radialement depuis la tige de piston (2, 2'), laquelle surface de butée, lors de l'insertion de la tige de piston (2, 2') vient en prise avec le corps de vérin (3, 3') dans une position finale, dans lequel la surface de butée (5, 5', 5") recouvre et/ou entoure de manière étanche la zone de fente ou les zones de fentes (9, 9') entre la tige de piston (2, 2') et le bord de l'ouverture de sortie (15, 15').

2. Vérin à fluide sous pression (1, 1', 1", 1‴, 1ʺʺ) selon la revendication 1, **caractérisé en ce que** le corps de vérin (3, 3') est réalisé avec un ressort de rappel (10, 10') disposé dans celui-ci et agissant dans la direction d'insertion de la tige de piston (2, 2').

3. Vérin à fluide sous pression (1, 1', 1", 1‴, 1ʺʺ) selon la revendication 1 ou 2, **caractérisé en ce que** la surface de butée (5, 5', 5") est réalisée avec un corps d'étanchéité (6, 6', 6") s'étendant radialement depuis la tige de piston (2, 2') ou entourant radialement la tige de piston (2, 2') et recouvrant et/ou entourant de manière étanche la ou les zones de fentes (9, 9') entre la tige de piston (2, 2') et le bord de l'ouverture de sortie (15, 15') dans la position finale.

4. Vérin à fluide sous pression (1, 1', 1", 1‴, 1ʺʺ) selon la revendication 1 ou 2, **caractérisé en ce que** la surface de butée (5, 5', 5") est réalisée avec un corps de freinage (17) s'étendant radialement depuis la tige de piston (2, 2') ou avec plusieurs corps de freinage (17) disposés de manière à être adjacents radialement à la tige de piston (2, 2') et avec un corps d'étanchéité (6, 6', 6") s'étendant radialement depuis ledit ou lesdits corps de freinage ou entourant radialement le ou les corps de freinage (17), lequel corps d'étanchéité entoure de manière étanche la ou les zones de fentes (9, 9') entre la tige de piston (2, 2') et le bord de l'ouverture de sortie (15, 15') dans la position finale.

5. Vérin à fluide sous pression (1, 1', 1", 1‴, 1ʺʺ) selon la revendication 3, **caractérisé en ce que** la surface de butée (5, 5', 5") est réalisée avec un corps de freinage (17) s'étendant radialement depuis le corps d'étanchéité (6, 6', 6") ou avec plusieurs corps de freinage (17) disposés de manière à être adjacents radialement au corps d'étanchéité (6, 6', 6").

6. Vérin à fluide sous pression (1, 1', 1", 1‴, 1ʺʺ) selon la revendication 1 ou 2, **caractérisé en ce que** le corps de vérin (3, 3') est réalisé, sur sa face frontale, avec un corps d'étanchéité (6, 6', 6") s'étendant radialement depuis l'ouverture de sortie (15, 15') ou entourant radialement celle-ci, lequel corps d'étanchéité vient en prise de manière étanche avec la surface de butée (5, 5', 5") dans la position finale de la tige de piston (2, 2').

7. Vérin à fluide sous pression (1, 1', 1", 1‴, 1ʺʺ) selon la revendication 1 ou 2, **caractérisé en ce que** le corps de vérin (3, 3') est réalisé, sur sa face frontale, avec un corps de freinage (17) s'étendant radialement depuis le bord de l'ouverture de sortie (15, 15') ou avec plusieurs corps de freinage (17) disposés de manière à être adjacents radialement au bord de l'ouverture de sortie (15, 15') et avec un corps d'étanchéité (6, 6', 6") s'étendant radialement depuis ledit ou lesdits corps de freinage ou entourant radialement le ou les corps de freinage (17), lequel corps d'étanchéité vient en prise de manière étanche avec la surface de butée (5, 5', 5") dans la position finale.

8. Vérin à fluide sous pression (1, 1', 1", 1‴, 1ʺʺ) selon la revendication 6, **caractérisé en ce que** le corps de vérin (3, 3') est réalisé, sur sa face frontale, avec un corps de freinage (17) s'étendant radialement depuis le corps d'étanchéité (6, 6', 6") ou avec plusieurs corps de freinage (17) disposés de manière à être adjacents radialement au corps d'étanchéité (6, 6', 6").

9. Vérin à fluide sous pression (1, 1', 1", 1‴, 1ʺʺ) selon l'une des revendications 1 à 8, **caractérisé en ce qu'**une zone de fente ou plusieurs zones de fentes (9") est ou sont formées entre le piston (11, 11') et la paroi intérieure du corps de vérin.

10. Vérin à fluide sous pression (1, 1', 1", 1‴, 1ʺʺ) selon l'une des revendications 1 à 9, **caractérisé en ce que** le corps de vérin (3, 3') est réalisé avec au moins un canal de rinçage (23, 23', 23") qui débouche dans un canal de pénétration (8) pour la tige de piston (2, 2'), dans lequel une alimentation du canal de rinçage (23, 23', 23") est effectuée conjointement avec l'alimentation d'une chambre de vérin (12, 12', 16, 16').

11. Vérin à fluide sous pression (1, 1', 1", 1‴, 1ʺʺ) selon la revendication 10, **caractérisé en ce qu'**une chambre de vérin (12, 12', 16, 16') peut être purgée par l'intermédiaire du canal de rinçage (23, 23', 23").
